# EUROPÄISCHE PATENTSCHRIFT

(11) **EP 3 074 689 B1**
(45) Veröffentlichungstag und Bekanntmachung des Hinweises auf die Patenterteilung: **08.01.2020**
(21) Anmeldenummer: 14789262.4
(22) Anmeldetag: 24.10.2014
(51) Int. Cl.: F16N 7/40

(54) **NOTSCHMIERUNG FÜR WINDKRAFTGETRIEBE**
EMERGENCY LUBRICATION FOR WIND TURBINE GEARBOXES
LUBRIFICATION D'URGENCE DE TRANSMISSION D'ÉOLIENNE

(30) Priorität: 25.11.2013 DE 102013224017
(43) Veröffentlichungstag der Anmeldung: 05.10.2016
(73) Patentinhaber: ZF Friedrichshafen AG, 88046 Friedrichshafen (DE); ZF Wind Power Antwerpen NV, 3920 Lommel (BE)
(72) Erfinder: BOGAERT, Roger, B-9200 Dendermonde (BE); VAN DEN DONKER, Michiel, NL-5682 GM Best (NL)
(86) Internationale Anmeldenummer: PCT/EP2014/072805
(87) Internationale Veröffentlichungsnummer: WO 2015/074825

(56) Entgegenhaltungen:
- EP-A1- 2 600 037
- US-B1- 6 267 147

## Beschreibung

Die Erfindung betrifft ein System zur Notschmierung von Komponenten eines Getriebes, insbesondere zum zeitweiligen Betrieb einer Umlaufschmierung eines Getriebes einer Windkraftanlage bei Ausfall einer Schmierstoffpumpe, nach dem Oberbegriff von Anspruch 1.

Aus dem Stand der Technik, beispielsweise aus der Druckschrift
WO 2008/151583 A2, sind Systeme zur Notschmierung bekannt, bei denen eine elektrische mit einer mechanischen Pumpe kombiniert wird. Im Regelbetrieb dient die elektrische Pumpe der Schmierstoffversorgung. Fällt die elektrische Pumpe aus, etwa infolge eines Stromausfalls, wird die Schmierstoffversorgung von der mechanischen Pumpe aufrechterhalten. Die mechanische Pumpe wird dabei von sich drehenden Getriebeteilen angetrieben. Um zu vermeiden, dass die mechanische Pumpe auch im Regelbetrieb mitläuft, ist aber ein aufwändiger Mechanismus erforderlich, der die mechanische Pumpe im Notbetrieb, das heißt bei Ausfall der elektrischen Pumpe, zuschaltet. Zudem verliert die mechanische Pumpe an Leistung, wenn das Getriebe gestoppt wird uns sich dessen Drehbewegung verlangsamt. Beim Herunterfahren einer Windkraftanlage kann ein Schmierstoffmangel daher nicht zuverlässig verhindert werden.

Die Druckschriften EP 2 351 950 B1, US 6 267 147 B1 und DE 37 02 008 A1 offenbaren Systeme zur Notschmierung ohne eine mechanische Pumpe. Anstelle der mechanischen Pumpe weisen diese Systeme einen Behälter auf, in dem Schmierstoff zwischengespeichert wird. Der Behälter ist erhöht angeordnet. Daher kann der Schmierstoff aus dem Zwischenspeicher ohne weitere Energiezufuhr in das Getriebe fließen. Im Regelbetrieb ist die Schmierstoffversorgung des Getriebes als Trockensumpfschmierung ausgestaltet. Beim Übergang in den Notbetrieb öffnet sich ein Ventil, so dass der in dem Behälter zwischengespeicherte Schmierstoff in das Getriebe fließen kann. Infolgedessen erhöht sich der Schmierstoffpegel in dem Getriebe, so dass aus der Trockensumpfschmierung eine Tauchschmierung wird.

Es gibt aber Getriebe, bei denen eine Tauchschmierung unzureichend ist. Insbesondere die Schmierstoffversorgung von Gleitlagern kann mittels Tauchschmierung oft nicht zufriedenstellend gelöst werden.

Der Erfindung liegt die Aufgabe zugrunde, unter Umgehung der den aus dem Stand der Technik bekannten Systemen innewohnenden Nachteile die Schmierstoffversorgung eines Getriebes im Notbetrieb sicherzustellen. Insbesondere soll im Notbetrieb eine Umlaufschmierung mit einem Öldruck aufrechterhalten werden, sodass das System kontorolliert heruntergefahren werden kann, ohne dass es zu einem Schmierstoffmangel kommt.

Diese Aufgabe wird durch ein System nach Anspruch 1 gelöst. Bevorzugte Weiterbildungen sind in den Unteransprüchen angegeben.

Ein erfindungsgemäßes System zur Notschmierung umfasst eine Schmierstoffpumpe und mindestens eine Austrittsöffnung zum Aufbringen von Schmierstoff auf mindestens eine erste zu schmierende Komponente eines Getriebes. Bei dem Getriebe kann es sich insbesondere um das Getriebe einer Windkraftanlage handeln, bei der zu schmierenden Komponente um ein Gleitlager.

Die Austrittsöffnung ist so angeordnet, dass der an der Austrittsöffnung austretende Schmierstoff auf eine Schmierstelle der zu schmierenden Komponente gelangt. Beispielsweise kann ein Gleitlager mit einer Bohrung versehen sein, durch die der Schmierstoff in einen Lagerspalt geleitet wird. Bei der Mündung der Bohrung in den Lagerspalt handelt es sich dann um die obengenannte Austrittsöffnung. Auch kann es sich bei der Austrittsöffnung um eine geeignet in dem Getriebe angebrachte Düse handeln.

Erfindungsgemäß umfasst das System einen ersten Hohlraum. Dabei ist die Schmierstoffpumpe zur Förderung mindestens eines Teils des Schmierstoffs in den ersten Hohlraum ausgebildet. Insbesondere besteht dazu zwischen der Schmierstoffpumpe und dem ersten Hohlraum eine schmierstoffleitende Verbindung.

Der erste Hohlraum ist zur Zwischenspeicherung des Schmierstoffs und Beaufschlagung des zwischengespeicherten Schmierstoffs, das heißt des von der Schmierstoffpumpe geförderten und in den ersten Hohlraum eingeleiteten Schmierstoffs, mit einer Lageenergie ausgebildet.

Lageenergie ist gleichbedeutend mit potentieller Energie. Hierunter wird allgemein die Energiedifferenz eines Bezugsobjekts zwischen zwei verschiedenen Orten innerhalb eines konservativen Kraftfeldes verstanden. Potentielle Energie ist also die Energie des Bezugsobjekts, die sich aus seiner aktuellen Lage innerhalb des Kraftfeldes bestimmt. Bei dem Kraftfeld kann es sich um das Gravitationsfeld der Erde handeln.

Auch eine Feder erzeugt ein konservatives Kraftfeld. Die Spannenergie der Feder stellt also potentielle Energie dar.

Weiterhin definiert eine Leitung, in der eine Flüssigkeit mit einem Druck beaufschlagt wird, ein konservatives Kraftfeld.

Bei dem genannten Bezugsobjekt kann es sich insbesondere um den in dem ersten Hohlraum zwischengespeicherten Schmierstoff handeln.

Erfindungsgemäß besteht weiterhin eine schmierstoffleitende Verbindung zwischen dem ersten Hohlraum und der Austrittsöffnung. Infolge der Beaufschlagung des Schmierstoffs mit der Lageenergie entsteht so eine Energiedifferenz zwischen dem in dem ersten Hohlraum zwischengespeicherten Schmierstoff und dem Schmierstoff an der Austrittsöffnung. Der in dem ersten Hohlraum zwischengespeicherte Schmierstoff wird also mit einer Lageenergie relativ zu dem Schmierstoff an der Austrittsöffnung beaufschlagt. Zwischen dem in dem ersten Hohlraum zwischengespeicherten Schmierstoff und dem Schmierstoff an der Austrittsöffnung besteht eine Potentialdifferenz.

Die Lageenergie, mit welcher der in dem ersten Hohlraum zwischengespeicherte Schmierstoff beaufschlagt wird, wirkt derart, dass der Schmierstoff an der Austrittsöffnung mit einem Druck beaufschlagt wird. Der erste Hohlraum ist also so ausgebildet, dass an der Austrittsöffnung ein Druck auf den Schmierstoff wirkt. Dieser Druck dient dazu, den Schmierstoff in die erste Schmierstelle zu fördern. Der Druck ermöglicht nicht nur die Schmierung eines hydrodynamischen Gleitlagers, sondern insbesondere auch die Schmierung eines hydrostatischen Gleitlagers.

Da die Schmierstoffpumpe zur Förderung des mindestens einen Teils des Schmierstoffs in den ersten Hohlraum ausgebildet ist, ist die Schmierstoffpumpe auch geeignet, die Lageenergie aufzubringen, mit welcher der in dem ersten Hohlraum zwischengespeicherte Schmierstoff beaufschlagt ist. Im Regelbetrieb dient die Schmierstoffpumpe also unter anderem dazu, die Lageenergie des in dem ersten Hohlraum zwischengespeicherten Schmierstoffs aufzubauen.

Im Notbetrieb, das heißt wenn die Schmierstoffpumpe ausfällt oder an Pumpleistung verliert, sorgt die Lageenergie des in dem ersten Hohlraum zwischengespeicherten Schmierstoffs dafür, dass der Schmierstoff durch die schmierstoffleitende Verbindung zwischen dem ersten Hohlraum und der Austrittsöffnung fließt, an der Austrittsöffnung austritt und auf beziehungsweise in die erste Schmierstelle gelangt. Die Lageenergie des in dem ersten Hohlraum zwischengespeicherten Schmierstoffs verringert sich dabei.

Um zu verhindern, dass der Schmierstoff im Notbetrieb durch die schmierstoffleitende Verbindung zwischen der Schmierstoffpumpe und dem ersten Hohlraum zur Schmierstoffpumpe zurückfließt, ist diese Verbindung vorzugsweise mit einem Rückschlagventil versehen.

Der erste Hohlraum kann gegenüber der Austrittsöffnung erhöht angebracht sein. In diesem Fall handelt es sich bei der Lageenergie des in dem ersten Hohlraum zwischengespeicherten Schmierstoffs mindestens teilweise um Energie, die aufgrund des Höhenunterschieds zwischen dem ersten Hohlraum und der Austrittsöffnung sowie der auf den Schmierstoff wirkenden Gewichtskraft zustande kommt.

Bevorzugt handelt es sich aber bei der Lageenergie des in dem ersten Hohlraum zwischengespeicherten Schmierstoffs um Druckenergie. Entsprechend weist eine bevorzugte Ausführungsform der Erfindung mindestens ein Mittel zum Beaufschlagen des in dem ersten Hohlraum zwischengespeicherten Schmierstoffs mit einem Druck auf. Dieser Druck pflanzt sich durch die schmierstoffleitende Verbindung zwischen dem ersten Hohlraum und der Austrittsöffnung fort und führt dazu, dass der Schmierstoff an der Austrittsöffnung austritt und in die erste Schmierstelle gelangt.

Ein Vorteil dieser Ausführungsform gegenüber der erhöhten Anbringung des ersten Hohlraums besteht in einer kompakteren Bauweise. Insbesondere kann der erste Hohlraum nahezu beliebig innerhalb des Getriebes angeordnet werden.

In einer weiterhin bevorzugten Ausführungsform der Erfindung weist das System einen Behälter auf, der den ersten Hohlraum bildet. Innerhalb des Behälters befindet sich ein verschiebbarer Kolben. Weiterhin ist ein Mittel zum Beaufschlagen des Kolbens mit einer Kraft vorgesehen. Die Kraft ist so ausgerichtet, dass sie zu einer Verschiebung des Kolbens führt. Weiterhin bildet der Kolben eine Begrenzungsfläche des ersten Hohlraums. Die Verschiebung des Kolbens geht daher mit einer Veränderung des Volumens des ersten Hohlraums einher. Dadurch ist es möglich, mittels des Kolbens den in dem ersten Hohlraum zwischengespeicherten Schmierstoff mit dem Druck zu beaufschlagen. Insbesondere führt somit die auf den Kolben wirkende Kraft zu einer Beaufschlagung des in dem ersten Hohlraum zwischengespeicherten Schmierstoffs mit dem Druck. Bei dem Mittel zum Beaufschlagen des Kolbens mit der Kraft handelt es sich vorzugsweise um eine Feder, etwa eine Spiralfeder bzw. Schraubenfeder oder eine pneumatische Feder, insbesondere eine Gasdruckfeder.

Eine besonders bevorzugte Ausführungsform der Erfindung ermöglicht eine Kombination aus Tauch- und Umlaufschmierung. Zur Umlaufschmierung dienen die oben beschriebene Schmierstoffpumpe mit der Austrittsöffnung, dem ersten Hohlraum und der schmierstoffleitenden Verbindung zwischen dem ersten Hohlraum und der Austrittsöffnung. Zur Tauchschmierung mindestens einer zweiten Schmierstelle des Getriebes dient ein Schmierstoffreservoir. Hierbei handelt es sich um eine mit dem Schmierstoff gefüllte Wanne. Als Wanne kann insbesondere das Getriebegehäuse ausgebildet sein.

Die zweite Schmierstelle befindet sich mindestens teilweise in dem Schmierstoffreservoir, so dass mindestens ein Teil der zweiten Schmierstelle mit dem in dem Schmierstoffreservoir befindlichen Schmierstoff in Kontakt kommt. Um die Notschmierung der ersten Schmierstelle sicherzustellen, muss der erste Hohlraum mit dem Schmierstoff gefüllt werden. Dies würde aber dazu führen, dass der Pegel des Schmierstoffs in dem Schmierstoffreservoir absinkt. Im Notbetrieb würde der in dem ersten Hohlraum befindliche Schmierstoff zurück in das Schmierstoffreservoir gelangen. Infolgedessen stiege der Pegel des Schmierstoffs in dem Schmierstoffreservoir. Um eine konstante Versorgung der zweiten Schmierstelle mit Schmierstoff sicherzustellen, ist aber ein gleichbleibender Pegel des Schmierstoffs in dem Schmierstoffreservoir erforderlich.

Eine volumenneutrale Notschmierung, bei welcher der Pegel des Schmierstoffs in dem Schmierstoffreservoir konstant bleibt, lässt sich mit einem zweiten Hohlraum erzielen, von dem eine schmierstoffleitende Verbindung in das Schmierstoffreservoir führt. Eine Mündung der schmierstoffleitenden Verbindung in das Schmierstoffreservoir liegt vorzugsweise unterhalb des Pegels des Schmierstoffs in dem Schmierstoffreservoir. Auf diese Weise kann der Schmierstoff sowohl von dem Schmierstoffreservoir in den zweiten Hohlraum, als auch von dem zweiten Hohlraum zurück in das Schmierstoffreservoir fließen. Bei der schmierstoffleitenden Verbindung zwischen dem zweiten Hohlraum und dem Schmierstoffreservoir handelt es sich vorzugsweise um eine Saug- und Druckleitung, d. h. eine Leitung, die ausgebildet ist, mit einem Über- und einem Unterdruck beaufschlagte Flüssigkeiten zu fördern.

Die Schmierstoffpumpe, die schmierstoffleitende Verbindung zwischen der Schmierstoffpumpe und dem ersten Hohlraum, der erste Hohlraum, die schmierstoffleitende Verbindung zwischen dem ersten Hohlraum und der Austrittsöffnung, die Austrittsöffnung, die erste Schmierstelle und das Schmierstoffreservoir sind Teil der Umlaufschmierung, liegen also innerhalb eines Schmierstoffkreislaufs, der die Umlaufschmierung bildet. Entsprechend ist die Schmierstoffpumpe ausgebildet, den mindestens einen Teil des Schmierstoffs von dem Schmierstoffreservoir in den ersten Hohlraum zu fördern. Weiterhin kann der Schmierstoff von der ersten Schmierstelle zurück in das Schmierstoffreservoir fließen.

Um die Umlaufschmierung im Notbetrieb volumenneutral zu gestalten, ist mindestens ein Mittel zum Koppeln des ersten Hohlraums und des zweiten Hohlraums vorgesehen. Die Kopplung erfolgt derart, dass ein Abfluss einer Menge von Schmierstoff aus dem ersten Hohlraum mit einem Zufluss einer gleichen Menge von Schmierstoff aus dem Schmierstoffreservoir in den zweiten Hohlraum einhergeht. Die Menge des Schmierstoffs, die im Notbetrieb aus dem ersten Hohlraum in das Schmierstoffreservoir gelangt, wird also aus dem Schmierstoffreservoir in den zweiten Hohlraum eingeleitet. Auf diese Weise bleibt der Pegel des Schmierstoffs in dem Schmierstoffreservoir konstant.

In einer bevorzugten Weiterbildung der volumenneutralen Notschmierung korrelieren die Volumina des ersten Hohlraums und des zweiten Hohlraums derart, dass das Gesamtvolumen bzw. die Summe des Volumens des ersten Hohlraums und des Volumens des zweiten Hohlraums konstant bleibt. Das Mittel zum Koppeln des ersten Hohlraums und des zweiten Hohlraums bewirkt entsprechend bei einer Verringerung des Volumens des ersten Hohlraums eine Vergrößerung des Volumens des zweiten Hohlraums. Da durch die Volumina der beiden Hohlräume die jeweils in dem Hohlraum enthaltene Menge von Schmierstoff festgelegt ist, geht infolgedessen ein Abfluss einer Menge von Schmierstoff aus dem ersten Hohlraum mit einem Zufluss einer gleichen Menge von Schmierstoff aus dem Schmierstoffreservoir in den zweiten Hohlraum einher.

Die oben beschriebene Kopplung des ersten Hohlraums und des zweiten Hohlraums lässt sich mittels des in dem Behälter verschiebbaren Kolbens realisieren. In einer weiterhin bevorzugten Ausführungsform bildet der Behälter daher nicht nur den ersten Hohlraum, sondern auch den zweiten Hohlraum. Der Kolben befindet sich zwischen dem ersten Hohlraum und dem zweiten Hohlraum, trennt also den ersten Hohlraum von dem zweiten Hohlraum. Eine erste Fläche des Kolbens bildet eine Begrenzungsfläche des ersten Hohlraums, eine zweite Fläche des Kolbens bildet eine Begrenzungsfläche des zweiten Hohlraums. Durch eine Verschiebung des Kolbens verkleinert sich einer der beiden Hohlräume, während sich der jeweils andere Hohlraum in gleichem Maße vergrößert.

Vorzugsweise hat der Behälter die Form eines Hohlzylinders, in dessen Inneren der Kolben verschiebbar angeordnet ist. Dabei berührt der Kolben die innere Mantelfläche des Hohlzylinders entlang einer in Umfangsrichtung geschlossenen Berührungsfläche. Vorzugsweise hat die Berührungsfläche die Form einer Mantelfläche eines Zylinders. Der Kolben trennt den ersten Hohlraum von dem zweiten Hohlraum flüssigkeitsdicht.

Als schmierstoffleitende Verbindung zwischen dem ersten Hohlraum und der Austrittsöffnung, als schmierstoffleitende Verbindung zwischen der Schmierstoffpumpe und dem ersten Hohlraum und als schmierstoffleitende Verbindung zwischen dem zweiten Hohlraum und dem Schmierstoffreservoir eignen sich Rohre oder Schläuche, insbesondere Saug- und Druckleitung. Auf diese Weise ist es möglich, den Behälter an einer beliebigen Stelle in dem Getriebe, insbesondere dort, wo freier Bauraum zur Verfügung steht, unterzubringen.

Vielfach eignet sich das Schmierstoffreservoir zur Unterbringung des Behälters. Eine bevorzugte Ausführungsform sieht daher vor, den Behälter mindestens teilweise innerhalb des Schmierstoffreservoirs anzuordnen. Auf diese Weise kann die schmierstoffleitende Verbindung zwischen dem zweiten Hohlraum und dem Schmierstoffreservoir besonders einfach ausgestaltet werden: Der zweite Hohlraum kann dann mittels einer Bohrung in dem Behälter schmierstoffleitend mit dem Schmierstoffreservoir verbunden werden. Bevorzugt befindet sich die Bohrung unterhalb des Pegels des Schmierstoffs in dem Schmierstoffreservoir.

Grundsätzlich besteht die Möglichkeit einer Parallelschaltung oder einer Serienschaltung des ersten Hohlraums. Bei einer Parallelschaltung ist ein Bypass vorgesehen, der Schmierstoff an dem ersten Hohlraum vorbeileitet. Der Bypass ist eine schmierstoffleitende Verbindung zwischen der Schmierstoffpumpe und der Austrittsöffnung. Im Regelbetrieb wird die Schmierstelle über den Bypass mit Schmierstoff versorgt. Um zu verhindern, dass sich währenddessen der erste Hohlraum entleert, kann die schmierstoffleitende Verbindung zwischen dem ersten Hohlraum und der Austrittsöffnung mit einem stromlos offenen Ventil versehen sein. Im Regelbetrieb, wenn also Strom anliegt, ist dieses Ventil geschlossen. Bei einem Stromausfall öffnet sich das Ventil, so dass der in dem ersten Hohlraum zwischengespeicherte Schmierstoff auf die erste Schmierstelle gelangen kann.

Eine derartige Notschmierung funktioniert allerdings nicht unabhängig von der Ausfallursache der Schmierstoffpumpe. Die Notschmierung erfolgt lediglich, wenn die Schmierstoffpumpe aufgrund eines Stromausfalls stehenbleibt. Ist die Schmierstoffpumpe hingegen defekt, bleibt das stromlos offene Ventil geschlossen. Infolgedessen bricht die Schmierstoffversorgung der ersten Schmierstelle zusammen.

In einer bevorzugten Ausführungsform der Erfindung ist der erste Hohlraum daher in Serie geschaltet. Dies bedeutet, dass sämtlicher von der Schmierstoffpumpe geförderter Schmierstoff in den ersten Hohlraum geleitet wird. Von dort gelangt der Schmierstoff durch die schmierstoffleitende Verbindung zwischen dem ersten Hohlraum und der Austrittsöffnung in die erste Schmierstelle. Dies gilt insbesondere für den Regelbetrieb. Der Schmierstoff fließt also von der Schmierstoffpumpe durch die schmierstoffleitende Verbindung zwischen der Schmierstoffpumpe und dem ersten Hohlraum in den ersten Hohlraum und von dort durch die schmierstoffleitende Verbindung zwischen dem ersten Hohlraum und der Austrittsöffnung zu der Austrittsöffnung, wo der Schmierstoff in die erste Schmierstelle gelangt. Kein Schmierstoff fließt an dem ersten Hohlraum vorbei zu der Austrittsöffnung.

In den Figuren dargestellte Ausführungsbeispiele der Erfindung werden im Folgenden näher beschrieben. Dabei kennzeichnen übereinstimmende Bezugsziffern gleiche oder funktionsgleiche Merkmale. Im Einzelnen zeigt
- Fig. 1: ein Getriebe mit integriertem Behälter zur Notschmierung; und
- Fig. 2: den Behälter zur Notschmierung im Detail.

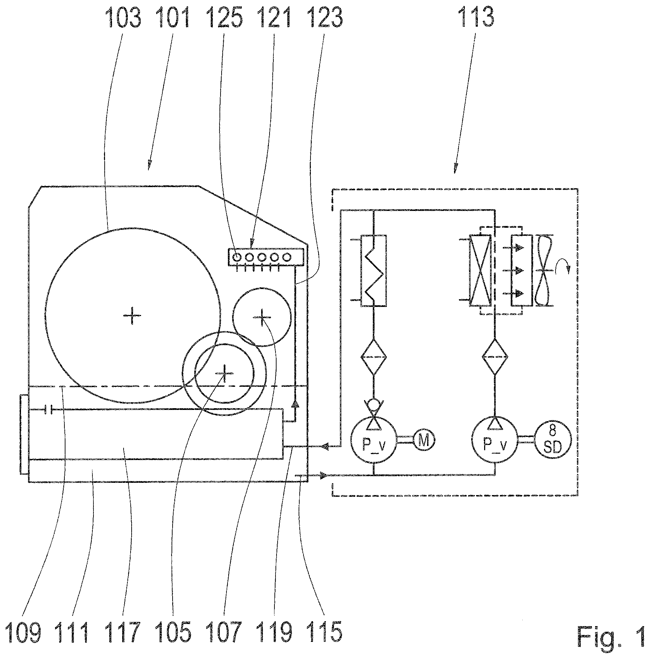

Das in Fig. 1 dargestellte Getriebe 101 umfasst drei Wellen 103, 105 und 107 mit Zahnrädern. Eine erste Welle 103 und eine zweite Welle 105 sind so angeordnet, dass sich auf den beiden Wellen 103 und 105 befindlichen Zahnräder teilweise unterhalb des Pegels 109 eines in dem Getriebe 101 vorhanden Schmierstoffreservoirs 111 befinden. Die Schmierung dieser Zahnräder erfolgt also durch Tauchschmierung.

Ein auf einer dritten Welle 107 angebrachtes Zahnrad hingegen befindet sich oberhalb des Pegels 109. Daher muss die Schmierung mittels Umlaufschmierung erfolgen. Zu diesem Zweck ist eine Schmierstoffpumpe 113 vorgesehen. Die Schmierstoffpumpe 113 fördert durch einen Ansaugstutzen 115 Schmierstoff aus dem Schmierstoffreservoir 111. Der Schmierstoff gelangt von der Pumpe 113 über eine zwischen der Pumpe 113 und einem Behälter 117 verlaufende Leitung 119 in den Behälter 117. Von dem Behälter 117 gelangt der Schmierstoff über eine zwischen dem Behälter 117 und einem Schmierstoffapplikator 121 verlaufende Leitung 123 zu dem Schmierstoffapplikator 121. Der Schmierstoffapplikator 121 ist mit mehreren Austrittsöffnungen 125 versehen, durch die austretender Schmierstoff das Zahnrad der dritten Welle 107 erreicht.

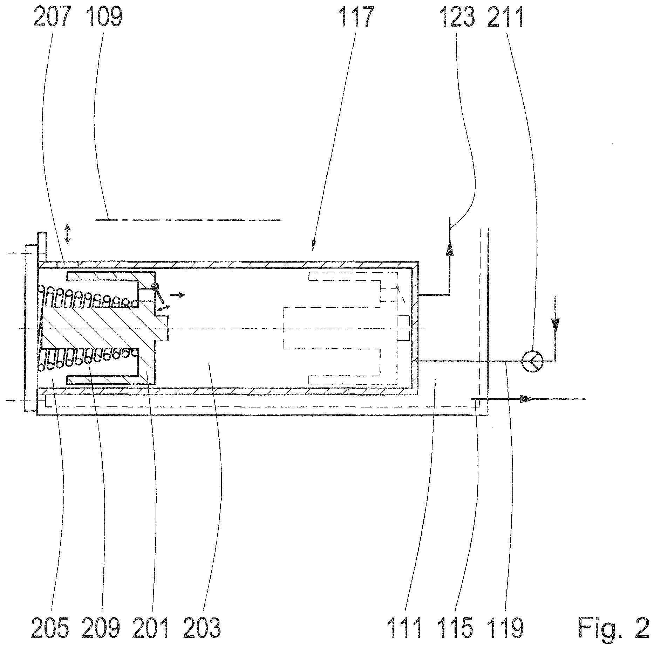

Den Aufbau des Behälters 117 verdeutlicht Fig. 2. Der Behälter 117 weist die Form eines Hohlzylinders auf und umschließt demnach einen zylinderförmigen Hohlraum. Ein Kolben 201 unterteilt den Hohlraum in einen ersten Hohlraum 203 und einen zweiten Hohlraum 205. Der erste Hohlraum ist durch die schmierstoffleitende Verbindung 119 schmierstoffleitend mit der Pumpe 113 verbunden. Über die schmierstoffleitende Verbindung 123 ist der erste Hohlraum 203 darüber hinaus schmierstoffleitend mit dem Schmierstoffapplikator 121 beziehungsweise mit den Austrittsöffnungen 125 verbunden.

Der Kolben 201 ist horizontal beziehungsweise axial in Bezug auf den Behälter 117 verschiebbar. In der Ansicht von Fig. 2 ist der Kolben 201 von links nach rechts und von rechts nach links verschiebbar.

Fördert die Schmierstoffpumpe 113 Schmierstoff in den ersten Hohlraum 203, bewegt sich der Kolben 201 - in der Ansicht von Fig. 2 - nach links. Dadurch vergrößert sich der erste Hohlraum 203. Der zweiten Hohlraum 205 wird in gleichem Maße verkleinert.

Eine Bohrung 207 in dem Behälter 117 schafft eine schmierstoffleitende Verbindung zwischen dem zweiten Hohlraum und dem Schmierstoffreservoir 111. Insbesondere befindet sich die Bohrung 207 unterhalb des Pegels 109. Bei einer Bewegung des Kolbens 201 nach links beziehungsweise bei einer Verkleinerung des zweiten Hohlraums 205 fließt Schmierstoff aus dem zweiten Hohlraum 205 durch die Bohrung 207 in das Schmierstoffreservoir 111.

Eine Spiralfeder 209 übt eine Kraft auf den Kolben 201 aus, die eine Verschiebung des Kolbens 201 - in der Ansicht von Fig. 2 - nach rechts bewirkt. Fällt die Pumpe 113 aus, verkleinert sich dadurch der erste Hohlraum 203. Damit der aus dem ersten Hohlraum 203 entweichende Schmierstoff nicht durch die schmierstoffleitende Verbindung 119 zu der Pumpe 113 zurückfließt, sondern durch die schmierstoffleitende Verbindung 123 zu dem Schmierstoffapplikator 121 gelangt, ist die schmierstoffleitende Verbindung 119 zwischen dem Behälter 117 und der Pumpe 113 mit einem Rückschlagventil 211 versehen.

In gleichem Maße, wie sich der erste Hohlraum 203 verkleinert, vergrößert sich der zweite Hohlraum 205. Dabei strömt Schmierstoff durch die Bohrung 207 von dem Schmierstoffreservoir 111 in den zweiten Hohlraum 205. Hierdurch bleibt der Pegel 109 konstant.

### Bezugszeichen

- 101: Getriebe
- 103: Zahnrad
- 105: Welle
- 107: Welle
- 109: Pegel
- 111: Schmierstoffreservoir
- 113: Schmierstoffpumpe
- 115: Ansaugstutzen
- 117: Behälter
- 119: Leitung
- 121: Schmierstoffapplikator
- 123: Leitung
- 125: Austrittsöffnung
- 201: Kolben
- 203: Hohlraum
- 205: Hohlraum
- 207: Bohrung
- 209: Spiralfeder
- 211: Rückschlagventil

## Patentansprüche

1. System zur Notschmierung,
mit einer Schmierstoffpumpe (113),
mit mindestens einer Austrittsöffnung (125) zum Aufbringen von Schmierstoff auf mindestens eine erste Schmierstelle (107) eines Getriebes (101),
mit einem ersten Hohlraum (203) und einem zweiten Hohlraum (205),
mit einer schmierstoffleitenden Verbindung zwischen dem ersten Hohlraum (203) und der Austrittsöffnung (125), mit einem Behälter (117),
mit einem innerhalb des Behälters (117) verschiebbaren Kolben (201), und
mit mindestens ein Mittel (209) zum Beaufschlagen des Kolbens (201) mit einer Kraft; wobei
der Behälter (117) den ersten Hohlraum (203) und den zweiten Hohlraum (205) bildet; wobei
der Kolben (201) den ersten Hohlraum (203) von dem zweiten Hohlraum (205) trennt; wobei
der erste Hohlraum (203) zur Zwischenspeicherung des Schmierstoffs ausgebildet ist; und wobei
der Kolben (201) den in dem ersten Hohlraum (203) zwischengespeicherten Schmierstoff mit einem Druck beaufschlagt; **gekennzeichnet durch**
eine schmierstoffleitende Verbindung (207) zwischen dem zweiten Hohlraum (205) und einem Schmierstoffreservoir (111); wobei
das Schmierstoffreservoir (111) zur Tauchschmierung mindestens einer zweiten Schmierstelle (103, 105) des Getriebes (101) dient; wobei
die Schmierstoffpumpe (113) ausgebildet ist, den mindestens einen Teil des Schmierstoffs von dem Schmierstoffreservoir (111) in den ersten Hohlraum (203) zu fördern; und wobei
der Schmierstoff von der ersten Schmierstelle (107) zurück in das Schmierstoffreservoir (111) fließen kann.

2. System nach dem vorhergehenden Anspruch, **dadurch gekennzeichnet, dass** der Behälter (117) mindestens teilweise innerhalb des Schmierstoffreservoirs (111) angeordnet ist.

3. System nach dem vorhergehenden Anspruch, **dadurch gekennzeichnet, dass** sämtlicher von der Schmierstoffpumpe (113) geförderter Schmierstoff in den ersten Hohlraum (203) geleitet wird.

## Claims

1. System for emergency lubrication
with a lubricant pump (113)
with at least one outlet opening (125) for applying lubricant to at least one first lubrication point (107) of a transmission (101),
with a first cavity (203) and a second cavity (205),
with a lubricant-conveying connection between the first cavity (203) and the outlet opening (125),
with a container (117),
with a piston (201) that can be displaced within the container (117), and
with at least one means (209) for applying a force to the piston (201); wherein
the container (117) forms the first cavity (203) and the second cavity (205); wherein
the piston (201) separates the first cavity (203) from the second cavity (205); wherein
the first cavity (203) is designed for storing the lubricant; and wherein
the piston (201) applies a pressure to the lubricant stored in the first cavity (203); **characterized by** a lubricant-conveying connection (207) between the second cavity (205) and a lubricant reservoir (111);
wherein
the lubricant reservoir (111) serves for splash lubrication of at least a second lubrication point (103, 105) of the transmission (101); wherein
the lubricant pump (113) is designed to deliver the at least one portion of the lubricant from the lubricant reservoir (111) into the first cavity (203); and wherein
the lubricant can flow from the first lubrication point (107) back into the lubricant reservoir (111).

2. System according to the preceding claim, **characterized in that** the container (117) is arranged at least partially within the lubricant reservoir (111).

3. System according to the preceding claim, **characterized in that** all of the lubricant delivered by the lubricant pump (113) is conveyed into the first cavity (203).

## Revendications

1. Système de lubrification d'urgence comprenant une pompe à lubrifiant (113),
au moins une ouverture de sortie (125) destinée à appliquer un lubrifiant sur au moins un premier point de lubrification (107) d'une transmission (101),
une première cavité (203) et une deuxième cavité (205), une liaison de conduction de lubrifiant prévue entre la première cavité (203) et l'ouverture de sortie (125), un récipient (117),
un piston (201) pouvant être déplacé à l'intérieur du récipient (117) et
au moins un moyen (209) destiné à soumettre le piston (201) à une force ;
le récipient (117) formant la première cavité (203) et la deuxième cavité (205) ;
le piston (201) séparant la première cavité (203) de la deuxième cavité (205) ;
la première cavité (203) étant conçue pour effectuer un stockage intermédiaire du lubrifiant ; et
le piston (201) soumettant le lubrifiant, temporairement stocké dans la première cavité (203), à une pression ; **caractérisé par** une liaison de conduction de lubrifiant (207) prévue entre la deuxième cavité (205) et un réservoir de lubrifiant (111) ;
le réservoir de lubrifiant (111) servant à la lubrification par barbotage d'au moins un deuxième point de lubrification (103, 105) de la transmission (101) ;
la pompe à lubrifiant (113) étant conçue pour transporter l'au moins une partie du lubrifiant du réservoir de lubrifiant (111) jusque dans la première cavité (203) ; et
le lubrifiant du premier point de lubrification (107) pouvant retourner dans le réservoir de lubrifiant (111).

2. Système selon la revendication précédente, **caractérisé en ce que** le récipient (117) est disposé au moins en partie dans le réservoir de lubrifiant (111).

3. Système selon la revendication précédente, **caractérisé en ce que** tout le lubrifiant transporté par la pompe à lubrifiant (113) est acheminé dans la première cavité (203).
